# EUROPÄISCHE PATENTSCHRIFT

(11) **EP 1 584 302 B1**
(45) Veröffentlichungstag und Bekanntmachung des Hinweises auf die Patenterteilung: **16.03.2011**
(21) Anmeldenummer: 05007136.4
(22) Anmeldetag: 01.04.2005
(51) Int. Cl.: A61C 17/02, B05B 9/08

(54) **Munddusche**
Mouth spray apparatus
Pulvérisateur buccal

(30) Priorität: 06.04.2004 DE 202004005608 U
(43) Veröffentlichungstag der Anmeldung: 12.10.2005
(73) Patentinhaber: Hauck, Wolfgang, 95445 Bayreuth (DE)
(72) Erfinder: Hauck, Wolfgang, 95445 Bayreuth (DE)
(74) Vertreter: Küchler, Stefan

(56) Entgegenhaltungen:
- CH-A5- 685 802
- DE-U- 7 438 931
- DE-U1- 8 610 186
- DE-U1- 9 401 685
- GB-A- 2 086 488
- US-A- 3 144 867
- US-A- 3 207 387

## Beschreibung

Die Erfindung richtet sich auf eine Munddusche, umfassend einen stabilen Behälter für das Spülfluid aus einem steifen Werkstoff, mit einem Boden, worauf der Behälter in der normalen Gebrauchslage aufrecht steht, und mit einem Mantel; einen lösbaren Behälterverschluß; eine manuell betätigbare Luftpumpe, deren Druckleitung mit dem Behälterinneren gekoppelt ist; und einen Auslaß für das Reinigungsfluid, wobei der mit dem Behälterinneren gekoppelte Auslaß wie auch die manuell betätigbare Luftpumpe an dem Behälterverschluß angeordnet ist.

Mundduschen erfreuen sich stetig zunehmender Beliebtheit. Die hohe Reinigungswirkung wie auch die angenehme und durchblutungsfördernde Massage des Zahnfleisches sind klare Argumente, die für die Verwendung von Mundduschen für die tägliche Zahnpflege sprechen.

Zu berücksichtigen ist hierbei jedoch, dass für einen ausreichend "harten" Strahl des Spülfluids ein nicht unerheblicher Druck benötigt wird. Dafür wird bei bekannten Mundduschen auf eine Hilfsenergie zurückgegriffen. Entweder wird hierzu der Druck einer Trinkwasserleitung verwendet, an welche die Munddusche anzuschließen ist, oder eine elektrisch zu betreibende Druckpumpe. Solche Hilfsenerglequellen stehen jedoch nicht immer zur Verfügung, bspw. in Wochenendhäusem, Berghütten, beim Camping, Zelten, auf Wanderschaft, ferner im Ausland, wo Netzspannungen und Trinkwasserarmaturen anderen Normungen gehorchen, etc.

Andererseits haben gerade bei dem Aufenthalt in der freien Natur Mundduschen entscheidende Vorteile, weil dabei im Gegensatz zur Verwendung von Zahnpasta keine chemischen Substanzen in die Umwelt gelangen. Für solche Zwecke ist deshalb bereits vorgeschlagen worden, als Hilfsenergiequelle eine CO₂-Patrone zu verwenden. Auch solche Patronen haben jedoch nur ein sehr begrenztes Volumen, so dass bei größeren Reisen mehrere Ersatzpatronen mitzuführen sind. Dabei macht sich nicht nur das Volumen und Gewicht dieser Patronen störend bemerkbar, sondern auch die unhandliche Mechanik zum auswechselbaren Anschluß der CO₂-Patronen. Schließlich ist zu bedenken, dass das CO₂ in Flüssigkeiten löslich ist und einerseits in verschiedenen Spülfluiden unerwünschte Reaktionen auslösen kann; überdies erzeugt es beim Hautkontakt ein brennendes Gefühl, das nicht jedermannes Geschmack entspricht.

Die DE 86 10 186 U1 offenbart eine Munddusche mit einer Luftpumpe, die innerhalb einer in dem Behälter angeordneten, zylindermantelförmigen Einstülpung des Behälterbodens angeordnet ist, wodurch das Füllvolumen des Behälters deutlich reduziert ist.

Auch bei der CH 685 802 A5, auf welcher Offenbarung die zweiteilige Form des Anspruchs 1 basiert, befindet sich die dortige Pumpe, nämlich ein Doppelhohlzylinder samt Hohlkolben, innerhalb des Behälters, wo er kostbaren Raum beansprucht, so dass das Füllvolumen des Behälters in erheblichem Umfang reduziert ist.

Die DE 94 01 685 U1 betrifft eine Munddusche, allerdings ohne eine Luftpumpe. Bei einer dort offenbarten Ausführungsform ist statt dessen eine Wasserpumpe vorgesehen, welche durch eine Wassereinlaßventil Wasser ansaugt und durch ein Wasserauslaßventil an den daran angeschlossenen Schlauch abgibt; bei einer zweiten, dort offenbarten Ausführungsform ist ein Druckspeicher in Form einer Druckgaspatrone vorgesehen, sowie ein von einem Betätigungshebel zu öffnendes und zu schließendes Ventil mit zwei Ventilkolben, die je nach Stellung des Betätigungshebels offen oder geschlossen sind, um Gas von der Druckgaspatrone ins Innere des Gehäuses einströmen zu lassen oder nicht. Ist der Druckspeicher leer, muß ein neuer gekauft werden, was gerade auf Reisen ein nicht unerhebliches Problem darstellt.

Bei US 3 144 867 A gibt es überhaupt keine Luftpumpe, deren Druckleitung mit dem Behälterinneren gekoppelt wäre. Vielmehr existiert hier nur eine Saugpumpe, die an eine Saugleitung angeschlossen ist, die von dem Behälter nach außen führt. Es ist jedoch nicht möglich, auf diesem Weg einen Druck im Behälterinneren aufzubauen, weil dies durch ein Rückschlagventil verhindert würde. Es handelt sich hierbei vielmehr um eine Flüsslgkeits-Saug-Pumpe, die mittels Unterdruck arbeitet, um die Flüssigkeit aus dem Behälter anzusaugen, und nicht um eine Luft-Druck-Pumpe zur Erzeugung eines Luft-Überdrucks in dem Behälter. Eine Saugpumpe muß jedoch während des Sprühvorganges betätigt werden, was bei einer Munddusche recht unhandlich ist.

Ähnliches gilt für die DE 74 38 931 U1. Auch hier handelt es sich um eine Flüssigkeits-Saug-Pumpe anstelle einer Luft-Druck-Pumpe zur Erzeugung eines Luft-Überdrucks in dem Behälters. Damit ist die Förderrichtung dieser Pumpe klar: Es wird Flüssigkeit nach außen gepumpt, anstelle Luft nach innen zu pumpen. Auch hier muß demnach während einer Mundspülung ständig gepumpt werden.

Die GB 2 086 488 A offenbart überhaupt keine Munddusche, sondern eine Metallkanne mit einer Handpumpe und einem Handgriff. Diese Anordnung ist für toxische Substanzen gedacht, insbesondere für ein aus Kohlenteer gewonnenes Holzschutzmittel (Kreasot), welches krebserregend ist. Es ist einleuchtend, dass man derart giftige Substanzen nicht in einer Munddusche verwenden kann, was ja lebensgefährlich wäre

Auch die US 3 207 387 A offenbart keine Munddusche, sondern eine Spritzpistole, wiederum mit einem Pumpgriff, der von einer ganzen Hand zu umschließen ist. Damit ist auch dieses Gerät weder zur Verwendung als Munddusche gedacht noch dazu auch nur geeignet.

Das der Erfindung zugrunde liegende Problem besteht demnach darin, eine Munddusche derart weiterzubilden, dass diese völlig unabhängig von zivüisatorischen Hilfsmitteln wie Trinkwasserhähnen und Stromanschlüssen betreibbar ist, und zu deren Betrieb auch das Mitführen von Energiespeichern bspw. in Form von CO₂-Patronen oder Batterien überflüssig ist. Von weiterem Vorteil wäre es, wenn die zum Betrieb als Munddusche erforderlichen Utensilien möglichst klein und leicht sind, um bspw. auch in einem Rucksack mitgeführt werden zu können, wobei dennoch eine maximale Spülwassermenge bevorratet werden soll.

Die Lösung dieses Problems gelingt dadurch, dass bei einer gattungsgemäßen Munddusche die Luftpumpe außerhalb des Behälters für das Spülfluid angeordnet ist, nämlich seitlich neben dem Behälter an einem seitlich etwa radial auskragenden Fortsatz des Behälterverschlusses, der an seiner Peripherie in einen zur Längsachse des Behälters parallelen Gehäuseabschnitt übergeht, welcher die eigentliche Luftpumpe beherbergt.

Somit sind an dem Behälter selbst keine mechanischen Einrichtungen vorzusehen. Außerdem wird als Spülfluid häufig Wasser verwendet, das wiederum fast überall vorhanden ist, Insbesondere auch in der freien Natur, bspw. an Bachläufen. Da es deshalb nicht in jedem Fall erforderlich, ein Spülfluid mitzuführen, kann der Behälterverschluß auf Reisen von dem Behälter entfernt werden, so dass letzterer für andere Zwecke benutzt werden kann, bspw. als Behältnis für sonstige Utensilien, etc. Die verbleibenden Teile der erfindungsgemäßen Munddusche, nämlich Behälterverschluß, Luftpumpe und Sprühvorrichtung, bilden eine zusammenhängende Einheit und beanspruchen bspw. im Reisegepäck kaum Platz; ihr Gewicht ist vernachlässigbar. Da die Luftpumpe außerhalb des Behälters für das Spülfluid angeordnet ist, ergibt sich der Vorteil, dass das gesamte Volumen des Behälters zur Aufnahme des Spülfluids oder eines Druckraums für die komprimierbare Luft zur Verfügung steht. Somit lassen sich mit einem vergleichsweise kleinen Behälter, bspw. mit einem Fassungsvolumen von 0,5 l oder noch weniger, selbst bei einmaligem Druckaufbau Spülphasen von mehreren Minuten realisieren. Selbst für die gründliche Mundpflege einer Person ist daher keine Unterbrechung erforderlich. Indem die Luftpumpe seitlich neben dem Behälter plaziert ist, kann die Gesamthöhe der Anordnung reduziert werden, und es ergeben sich sehr kompakte Abmessungen. Zur Befestigung der Luftpumpe kann an dem Behälterverschluß ein etwa radial auskragender Ansatz vorgesehen sein, der an seiner Peripherie in einen zur Längsachse des Behälters parallelen Gehäuseabschnitt übergeht, welcher die eigentliche Luftpumpe beherbergt. Der Verlauf der Unterseite des radial auskragenden Ansatzes läßt sich der zumeist kalottenförmig gewölbten Oberseite des Behälters anpassen.

Wenn der stabile Behälter für das Spülfluid nur eine einzige Öffnung aufweist, die durch den Behälterverschluß verschließbar und zum Befüllen des Behälters mit dem Spülfluid durch Entfernen des Verschlusses zu öffnen ist, so läßt sich der Munddusch-Aufsatz mit wenigen Handgriffen entfernen; der entfernte Munddusch-Aufsatz bildet eine Einheit, so dass nichts verloren gehen kann.

Eine wichtige Weiterbildung der Erfindung besteht darin, dass für den Behälter ein zweiter Verschluß ohne Luftpumpe vorgesehen ist, so dass ein darin eingeschlossener Inhalt nicht entweichen kann. Sofern dieser zweite Verschluß flüssigkeitsdicht abschließt, lassen sich dann in dem Behälter auch Flüssigkeiten, bspw. Getränke aufbewahren.

Es liegt im Rahmen der Erfindung, dass der stabile Behälter für das Spülfluid etwa die Gestalt einer Flasche aufweist Eine Flaschenform ist besonders stabil im Hinblick auf inneren Überdruck. Ferner hat sie sich zum Aufbewahren von Flüssigkeiten seit langem bewährt. Schließlich ist es auch möglich, Flaschen thermisch zu isolieren, um darin bspw. auch gekühlte oder heiße Getränke über einen längeren Zeitraum hinweg aufzubewahren (sog. "Thermosflaschen"). Hierzu eigenen sich bspw. Flaschen aus Metall, insbesondere wenn dieselben mit einem inneren und einem äußeren Korpus hergestellt sind, zwischen denen ein Vakuum für eine thermische Isolation sorgt. Derartige Metallflaschen erfüllen auch alle Anforderungen im Hinblick auf einen hohen Innendruck.

Wenn der Boden des Behälters für das Spülfluid als etwa ebene Aufstandsfläche ausgebildet ist, so kann er ggf. sogar während des Betriebs als Munddusche abgestellt werden, um bspw. mit einer Hand den Sprühvorsatz zu bedienen und mit der anderen Hand einen Spiegel zu halten.

Der Mantel des Behälters für das Spülfluid sollte eine etwa zylindrische Form aufweisen. Diese Form hat sich als besonders widerstandsfähig im Hinblick auf einen inneren Überdruck erwiesen.

Ferner hat es sich bewährt, dass sich der Mantel des Behälters für das Spülfluid im Bereich seiner Oberseite nach Art eines Flaschenhalses radial verjüngt, bspw. in Form eines schulterartigen Übergangs. Eine solche Konstruktion hat den Vorteil, dass der Behälter selbst dank einer großen Standfläche eine hohe Standfestigkeit aufweist, während der oben auf den Flaschenhals aufsetzbare Verschluß relativ klein und damit platzsparend ausgeführt werden kann.

Es hat sich als günstig erwiesen, dass in oder an dem Flaschenhals ein Schraubgewinde vorgesehen ist. Mit einer Schraubverbindung lassen sich hohe, axiale Anpreßkräfte erzeugen, so dass ein zwischen Verschluß und Behälteröffnung eingelegtes Dichtungselement auch bei hohen, inneren Überdrücken von ggf. mehreren Atmosphären flüssigkeits- und insbesondere auch luftdicht abschließt. Damit ist gewährleistet, dass ein noch enthaltenes Spülfluid auch beim Stürzen des Behälters nicht auslaufen kann; ein aufgebauter Innendruck bleibt über einen längeren Zeitraum hinweg erhalten.

An dem Behälterverschluß kann ein zu dem Gewinde des Flaschenhalses komplementäres Gewinde vorgesehen sein und/oder ein auf den Rand der Behälteröffnung drückendes Dichtelement. Bspw. kann ein elastischer Dichtungsring unter geringfügiger, radialer Aufweitung über einen mit Außengewinde versehenen Pfropfen des Verschlusses aufgezogen sein. Wenn an dem Verschluß ein Innengewinde vorhanden ist zum Zusammenwirken mit einem Außengewinde an dem Flaschenhals, so kann an der Innenseite des Verschlusses ein in den Flaschenhals eingreifender Stopfen oder sonstiger Fortsatz vorgesehen sein, auf den dann ein Dichtungsring aufstülpbar ist.

Durch Ausführung der Luftpumpe nach Art einer Kolbenpumpe läßt sich eine mechanisch einfache und wenig störanfällige Konstruktion erreichen, wobei es im Idealfall nur ein einziges, bewegliches Element gibt, nämlich einen innerhalb eines Zylindergehäuses in dessen Längsrichtung verschiebbar geführten und gegenüber dem Gehäuse abgedichteten Kolben mit einem nach außen geführten Betätigungselement.

Damit der Behälter durch das Betätigen einer seitlich angeordneten Luftpumpe nicht umfallen kann, sollte sich in diesem Fall das mit dem Kolben der Luftpumpe verbundene Betätigungsorgan bis über die Grund- oder Bodenfläche des Behälters erstrecken, idealerweise sogar bis etwa zur Mitte derselben, so dass die Betätigungskraft etwa zentral entlang der Längsachse des Behälters wirkt. Dies kann durch einen etwa horizontal bzw. radial nach innen verlaufenden Bügel oder Hebel erreicht werden. Außerdem ist dann eine präzise und leichtgängige Führung des Kolbens innerhalb der Luftpumpe erforderlich, damit dieser sich nicht durch das zur Behältermitte hin versetzte Betätigungselement verkantet oder verklemmt.

Indem das Betätigungsorgan der Luftpumpe in seiner herabgedrückten Stellung arretierbar ist, so ist der Kolben samt Betätigungsstange schützend in dem Pumpengehäuse aufgenommen und kann auf Reisen od. dgl. nicht beschädigt werden.

Vornehmlich aus herstellungstechnischen Gründen sollte die Luftpumpe eine zylindrische Gestalt aufweisen. Allerdings wäre auch eine prismatische Form denkbar, die möglicherweise jedoch erhöhte Problem beim Abdichten des Kolbens mit sich bringen könnte.

Das für die Hubbewegung des Kolbens der Luftpumpe innerhalb eines Zylinders zur Verfügung stehende Volumen könnte etwa zwischen 1/10 und 1/3 des Volumens des Behälters für das Spülfluid liegen. Wenn der Spülfluidbehälter etwa zur Hälfte mit dem Spülfluid gefüllt ist, bleibt bspw. noch das halbe Volumen als Raum für die komprimierbare Luft übrig. Solchenfalls kann in diesem Volumen der Druck mit maximal etwa 5 Pumpenhüben um eine Atmosphäre erhöht werden.

Das Pumpengehäuse kann einen etwa konstanten Querschnitt aufweisen, bspw. zylindrisch gestaltet sein.

Es bietet sich an, die Länge des Pumpenzylinders derart zu bemessen, dass sie (etwa) einem Viertel bis dem Anderthalbfachen der Höhe des Behälters für das Spülfluid entspricht, vorzugsweise einem Drittel bis dem 1,25-fachen der Höhe dieses Behälters, insbesondere von der halben Höhe bis zu der einfachen Höhe des Behälters für das Spülfluid. Eine solche Bemessung ergibt sich aus der obigen Volumenbedingung unter Berücksichtigung der Tatsache, dass der lichte Querschnitt des Pumpenzylinders kleiner ist als der maximale Behälter- oder Flaschenquerschnitt. Bspw. kann der lichte Querschnitt des Pumpenzylinders etwa dem Querschnitt des in den Flaschenhals hineinragenden Stopfens entsprechen.

Eine seitlich angeordnete Luftpumpe sollte in ihrer Gesamtlänge kürzer sein als die Höhe des betreffenden Behälters, damit dieser problemlos auf einer ebenen Fläche abgestellt werden kann, ohne zu kippen.

Im Bereich einer Stirnseite des Pumpenzylinders läßt sich eine Lufteintrittsöffnung einerseits und - vorzugsweise im Bereich der gegenüberliegenden Stirnseite - eine Luftaustrittsöffnung andererseits vorsehen. Damit erhält man besonders einfache Strömungsverhältnisse innerhalb der Luftpumpe, wobei die Luft an einer Stirnseite angesaugt und an der gegenüberliegenden sodann unter Druck in den Behälter hinein abgegeben wird.

Eine Stirnfläche des Pumpenzylinders eignet sich zur Festlegung oder Anformung an der Oberseite des Behälterverschlusses oder an einem seitlich auskragenden Fortsatz desselben. Eine Festlegung wird besonders dadurch begünstigt, dass beide Flächen eben ausgebildet sein können. Andererseits vereinfacht sich dadurch auch die Anfertigung einer Form für ein integriertes Spritzgußteil.

Indem der Kolben mittels eines über die auslaßseitige und/oder obere Pumpenstirnfläche hinaus ragenden Betätigungselements in vertikaler Richtung innerhalb des Pumpenzylinders verschiebbar ist, wirkt die beim Pumpen aufzubringende Druckkraft vertikal nach unten; sie kann daher über den etwa ebenen Behälterboden auf eine ebene Unterlage od. dgl. abgeleitet werden.

Da bei einer nach unten gerichteten Pumpbewegung und einem einfachen Aufbau der Pumpe deren Auslaß naturgemäß im Bereich der Pumpenunterseite liegt, ergibt sich bei einer auf der Oberseite des Behälterverschlusses angeordneten Pumpe eine kurze Durchführung des Pumpenauslasses zu dem Hohlraum im Behälterinneren. Bei einer seitlich neben dem Behälter angeordneten Pumpe kann es dagegen vorteilhaft sein, neben dem eigentlichen Pumpenzylinder eine Leitung von dem Pumpenauslaß zu dem Behälterverschluß zu verlegen. Dadurch kann ein komplexer Aufbau der Pumpe vermieden werden.

Eine Konstruktionsvorschrift sieht vor, dass der Querschnitt des Kolbens etwa dem lichten Querschnitt innerhalb des Pumpenzylinders entspricht. Dies ist erforderlich, um eine möglichst vollständige und damit auch erheblichen Druckdifferenzen gewachsene Abdichtung zu erzieien. Dem selben Zweck dient eine Weiterbildung der Erfindung, wonach der Kolben einen teller-, schüssel- oder schalenförmig umgebogenen Rand aufweist, der sich zu der Auslaßseite der Pumpe hin öffnet. Dieser Rand wird bei einem Überdruck von der Auslaßseite gegenüber der Einlaßseite nach außen und damit gegen die Innenseite des Zylindergehäuses gedrückt und schließt damit dicht ab. Bei einem Druckgefälle in umgekehter Richtung wird der Rand des Kolbens dagegen nach innen gedrückt oder gesaugt und öffnet daher einen Luftspalt zwischen Kolben und Zylinderinnenseite, so dass Luft von der ansaugseitigen Pumpenkammer in die Druckkammer jenseits des Kolbens strömen kann.

Damit sich andererseits in der Druckkammer jenseits des Kolbens ein Unterdruck bilden kann, wenn der Kolben zurück bzw. nach oben bewegt wird, ist zwischen der Luftaustrittsöffnung der Luftpumpe und dem Innenraum des Behälters für das Spülfluid ein Rückschlagventil angeordnet, das so ausgebildet und eingebaut ist, dass es Luft von der Druckkammer der Pumpe in den Behälter hinein, aber nicht mehr zurück strömen läßt. Dieses Rückschlagventil ist vorzugsweise an der Unter- bzw. Innenseite des Behälterverschlusses angeordnet, bspw. eingesteckt und festgeklebt. Es kann auch bspw. in eine Öffnung an der Verschlußunterseite ein-oder angeschraubt sein, insbesondere auch mit einer Überwurfmutter. Wichtig ist ein fester und dichter Sitz gegenüber Druckbeanspruchung, insbesondere in Rückschlagrichtung. Das Ventil kann vergleichsweise klein ausgeführt sein und von seiner Größe und Bauart her dem Ventil für einen Fahrradschlauch entsprechen.

An dem Behälterverschluß sollte ferner ein mit dem Behälterinnenraum kommunizierender Auslaß zum Anschluß der eigentlichen Sprühvorrichtung vorgesehen sein. Denn die Luftpumpe dient nur zum Aufbau eines inneren Überdrucks; der Abbau desselben erfolgt durch die Entnahme des Spülfluids durch den dafür vorgesehenen Auslaß.

Damit in der normalen, d.h. auf dem Behälterboden aufrecht stehenden Gebrauchslage des Behälters beim Spülen nur das dafür vorgesehene Fluid ausströmt und nicht die den Druck aufrecht erhaltende Druckluft, ist an der in den Behälterinnenraum mündenden Öffnung der Strömungsverbindung in dem Behälterverschluß zu einer eigentlichen Sprühvorrichtung ein rohr- oder schlauchförmiger Fortsatz angeformt oder angeschlossen, dessen freie Mündung sich etwa im Bereich des Behälterbodens befindet. In diesem untersten Bereich steht bis zur nahezu vollständigen Entleerung des Behälters das Fluid, welches nach Art eines Siphons die Druckluft an einem vorzeitigen Entweichen hindert.

Indem - wie die Erfindung weiterhin vorsieht - die Sprühvorrichtung über einen Schlauch angeschlossen ist, so kann trotz unbeweglich aufgestelltem Behälter die Sprühvorrichtung in jede erdenkliche Gebrauchslage verbracht werden, um sämtliche Zahnzwischenräume oder sonstigen Bereiche in der zu pflegenden Mundhöhle erreichen zu können.

Zwischen einer Sprühdüse und dem Behälterinneren, insbesondere im Bereich eines Handgriffs der Sprühvorrichtung, kann ein manuell betätigbares Ventil vorgesehen sein. Dieses Ventil verschließt während einer Pumphase den Auslaß des Behälters, so dass sich ein innerer Überdruck aufbauen kann. Nach genügender Druckbeaufschlagung des Behälters wird sodann die Sprühvorrichtung in die Mundhöhle gerichtet und das in dem Griff derselben - stromabwärts eines Verbindungsschlauchs - befindliche Ventil geöffnet, um das Spülfluid gezielt entweichen zu lassen. Vorzugsweise ist das manuell betätigbare Ventil durch ein Federelement in seine Schließstellung vorgespannt, so dass es wie ein Taster betätigt werden kann, um kurze und präzise dosierte und gerichtete Sprühstöße abgeben zu können.

Es hat sich bewährt, an dem Verschluss ein manuell zu betätigendes und/oder bei Überschreiten eines Grenzdrucks öffnendes Entlüftungsventil vorzusehen. Damit ist ein definiertes Entlüften möglich. Andererseits kann der Innendruck begrenzt werden, um dadurch Beschädigungen zu vermeiden. Die dafür vorgesehene Öffnung innerhalb des Behälters sollte sich im Bereich von dessen Oberseite befinden, damit nur Luft, aber keine Flüssigkeit entweichen kann.

Schließlich entspricht es der Lehre der Erfindung, dass in einem seitlich neben dem Behälter angeordneten Gehäuse für die Luftpumpe, um einen Zentrumswinkel (bezüglich der Symmetrieachse des Gehäuses) von bspw. etwa 15° bis 45° verschoben, ein oder zwei Hohlräume zur Aufnahme von Utensilien vorgesehen sind, bspw. für Düse und Griff der eigentlichen Sprühvorrichtung und/oder für einen dieselbe mit dem Behälterauslaß verbindenden Schlauch. Diese Hohlräume sollten an der dem Behälterverschluß gegenüberliegenden Stirnseite des seitlichen Gehäuses offen sein, um bei Bedarf von dieser Seite aus die Sprühvorrichtung entnehmen zu können. Diese Öffnung kann verschließbar gestaltet sein, bspw. mittels einer aufsteckbaren Verschlußkappe oder einem aufklappbaren Deckel.

Weitere Merkmale, Eigenschaften, Vorteile und Wirkungen auf der Basis der Erfindung ergeben sich anhand der folgenden Beschreibung einer bevorzugten Ausführungsform der Erfindung sowie anhand der Zeichnung. Hierbei zeigt:

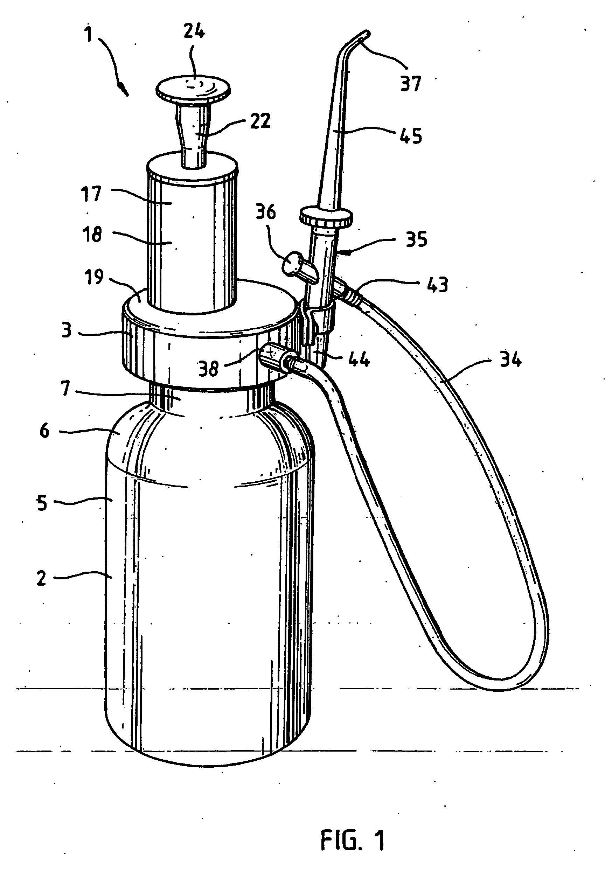

- Fig. 1: eine perspektivische Darstellung einer Munddusche; sowie
- Fig. 2: einen Vertikalschnitt durch die Fig. 1.

Die Munddusche 1 ist besonders geeignet für den Betrieb im Freien, bspw. beim Wandern oder Camping, aber auch in Wochenendhäusern, Skihütten, od. dgl. Denn als Behälter für das Spülfluid dient eine Metallflasche 2, die - ggf. mit einem anderen Deckel versehen - auch als Vorratsflasche für auf Ausflüge mitzuführende Getränke Verwendung finden kann. Bestens eignen sich hierfür SIGG-Getränkeflaschen, die in den unterschiedlichsten Größen erhältlich sind.

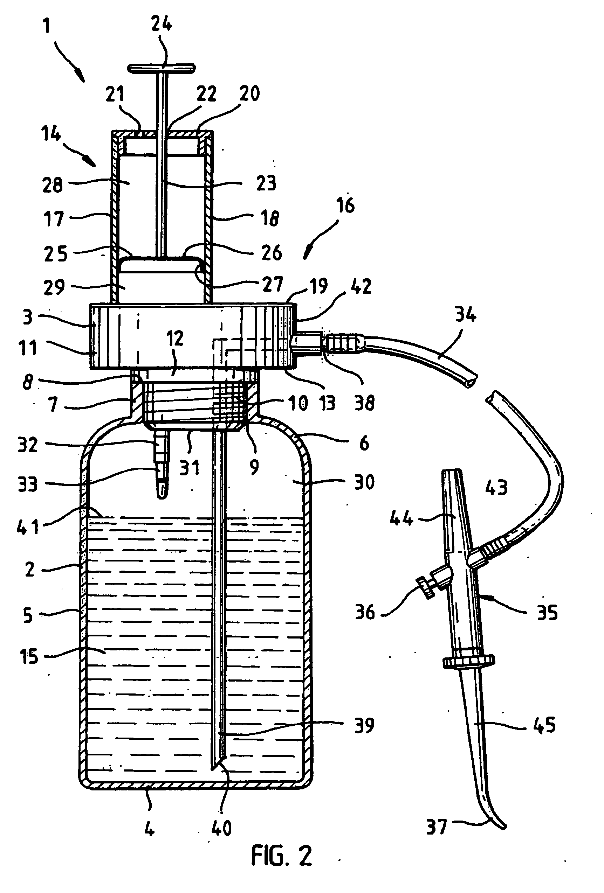

Hierfür wird der Verschluß 3 von dem Gefäßunterteil 2 abgeschraubt, und da alle für die Munddusche 1 spezifischen Einrichtungen an dem Verschluß 3 befestigt sind, verbleibt die neutrale Metallflasche 2, die sich nicht von anderen Getränkevorratsflaschen unterscheidet. Sie weist einen ebenen Boden 4 und einen zylindrischen Mantel 5 auf, der oben in einen etwa kalottenförmigen Schulterbereich 6 übergeht. Darauf sitzt ein zylindrischer Flaschenhals 7, bspw. vom halben Durchmesser im Verhältnis zu dem Durchmesser des Fiaschenmanteis 5. Wie sich aus Fig. 2 ergibt, schließt der Flaschenhals 7 an seiner Oberseite mit einer ebenen Ringfläche 8 ab und trägt an seiner Innenseite ein Gewinde 9 zum Einschrauben des Verschlusses 3.

Der Verschluß 3 kann bspw. als Kunststoffspritzgußteil ausgeführt sein. Bei der dargestellten Ausführungsform des Verschlusses 3 schließt sich an der Oberseite eines in das Flaschenhals-Gewinde 9 einschraubben Gewindestopfens 10 ein ebenfalls zylindrischer, etwa scheibenförmig auskragender Bereich 11 an. Über den Gewindestopfen 10 ist ein gummielastischer Dichtungsring 12 gezogen bzw. gestülpt. Dieser wird beim Aufschrauben des Verschlusses 3 auf den Flaschenhals 7 zwischen dessen oberer Ringfläche 8 und der Unterseite 13 des scheibenförmig auskragenden Bereichs 11 eingeklemmt und dichtet sodann den Verschluß 3 gegenüber dem Flaschenhals 7 ab. Die aus dem Anpreßdruck resultierende Reibungswirkung des zusammengepreßten Dichtungsringes 12 sorgt außerdem für einen festen und selbsttätig nicht lösbaren Sitz des Verschlusses 3 auf dem Flaschenhals 7.

Damit nicht nur das Gefäßunterteil 2, sondern auch der Verschluss 3 universell kombinierbar ist, können ggf. unterschiedliche Adapter vorgesehen sein, die auf verschiedene Gewindeformen (innen, außen), -durchmesser und/oder -steigungen passen und jeweils abdichten.

Der Verschluß 3 trägt zwei Einrichtungen, nämlich eine Einrichtung 14 zur Erzeugung eines Überdruckes in dem teilweise mit dem Spülfluid 15 - bspw. Wasser - gefüllten, flaschenförmigen Behälter 2 sowie eine Einrichtung 16 zur Entnahme des unter Druck stehenden Spülfluids 15 aus dem Behälter 2.

Die Druckerzeugungseinrichtung 14 umfaßt primär eine Luftpumpe 17. Diese besteht aus einem zylindrischen Gehäuse 18, das mit einer Stirnfläche an der Oberseite 19 des Verschlusses 3, insbesondere des scheibenförmig erweiterten Bereichs 11 desselben, angeformt ist. Das Pumpengehäuse 18 erstreckt sich vertikal nach oben und wird an seiner oberen Stirnfläche durch eine an- oder eingeschraubte, eingeschnappte und/oder eingeklebte Kappe 20 verschlossen.

Die Kappe 20 weist eine periphere Lufteintrittsöffnung 21 auf sowie eine zentrale Ausnehmung 22, die als Führung für einen langgestreckten Schaft 23 eines aus dem Pumpengehäuse 18, 20 heraus ragenden Betätigungselements 24 dient. Das untere Ende des Schafts 23 dieses Betätigungselements 24 ist mit einem Kolben 25 verbunden, der etwa eine tellerförmige Gestalt aufweist mit einer etwa ebenen Fläche 26 in seiner Mitte und einem demgegenüber nach unten umgebogenen Rand 27. Der Außenumfang des Randes 27 entspricht der lichten Öffnung innerhalb des Pumpengehäuses 18, so dass der Kolben innerhalb des Pumpengehäuses 18 in dessen Längsrichtung geführt verschiebbar ist, nämlich durch manuelles Auf- und Abbewegen des Betätigungselements 24.

Die Kammer 28 oberhalb des Kolbens 25 kommuniziert dank der Lufteintrittsöffnung 21 mit der Umgebung, so dass in der Kammer 28 stets der atmosphärische Druck herrscht. Wird der Kolben 25 nach oben gezogen, so entsteht in der Kammer 29 unterhalb desselben ein Unterdruck, und dank des etwa schulter- oder torus- bzw. wulstförmig nach unten umgebogenen Randes 27 wirkt diese Druckdifferenz zwischen den beiden Kammern 28, 29 in etwa radialer Richtung auf den Rand 27 ein. Dieser biegt sich dabei geringfügig nach innen und läßt dabei Luft von der oberen Kammer 28 in die untere Kammer 29 strömen, so dass sich ein Druckausgleich ergibt und auch in der unteren Kammer atmosphärischer Druck herrscht.

Wird sodann der Kolben 25 wieder nach unten bewegt, so wird die Luft in der unteren Kammer 29 komprimiert - es ergibt sich eine umgekehrte Druckdifferenz von unten nach oben. Diese erzeugt an dem Rand 27 des Kolbens 25 eine radial nach außen wirkende Kraft, und dieser wird abdichtend an die Innenseite des Pumpengehäuses 18 gepreßt, so dass die in der unteren Kammer 29 eingeschlossene Luft nicht mehr nach oben entweichen kann.

Die in der Kammer 29 eingeschlossene Luft kann sich ausschließlich dadurch entspannen, dass sie durch eine Leitungsverbindung innerhalb des Verschlusses 3, welche mit der unteren Kammer 29 der Luftpumpe 17 einerseits kommuniziert und mit dem Volumen 30 innerhalb des Behälters 2 andererseits, in den Behälter 2 strömt. Die dafür vorgesehene Leitungsverbindung durchsetzt den Verschluß 3 in vertikaler Richtung und mündet an der Unter- oder Innenseite 31 des Gewindestopfens 10. An der dortigen Mündung ist - bspw. mittels einer Überwurfmutter 32 - ein Rückschlagventil 33 angeordnet, das eine Luftströmung von der unteren Kammer 9 der Luftpumpe 17 in das Behältervolumen 30 zuläßt, aber nicht umgekehrt. Wird demnach die Luft in der unteren Kammer 29 so stark komprimiert, dass der dortige Druck größer wird als der Druck innerhalb des flaschenförmigen Behälters 2, so wird Luft durch die Leitung und das Rückschlagventil 33 in das Volumen 30 geschoben, bis ein Druckausgleich stattfindet. Auf diesem Weg kann durch mehrmaliges Heben und Senken des Kolbens 25 mittels des Betätigungselements 24 der Druck innerhalb des flaschenförmigen Behältnis 2 deutlich erhöht werden, bspw. auf ein mehrfaches des atmosphärischen Drucks.

Nachdem mit Hilfe der Einrichtung 14 ein zum Sprühen ausreichender Druck innerhalb des - bspw. zur Hälfte mit dem Spülfluid 15 gefüllten - Volumens 30 aufgebaut wurde, kann der eigentliche Spülvorgang beginnen.

Diesem Zweck dient die Entnahmeeinrichtung 16, die - von außen erkennbar - einen an dem Verschluß 3 angeschlossenen Schlauch 34 umfaßt sowie ein an dessen peripherem Ende befestigtes Handstück 35 mit einem Betätigungsknopf 36 und der eigentlichen Sprühdüse 37.

Von dem verschlußseitigen Anschluß 38 für den Schlauch 34 führt innerhalb des Verschlußkörpers 3 eine Leitung bis zu der Unterseite 31 des Gewindestopfens 10. Diese Leitung hat keine Verbindung zu der Luftleitung der Druckerhöhungseinrichtung 14. An der unterseitigen Mündung dieser Leitung ist ein gerade nach unten ragendes Rohr 39 angeschlossen, das erst knapp oberhalb des Bodens 4 des Behälters 2 endet. Steht der Behälter 2 aufrecht, so so liegt die freie Öffnung 40 des Rohres 39 unter dem Flüssigkeitsspiegel 41, bis der Behälter 2 nahezu völlig entleert ist. Daher kann so lange keine Luft aus dem oberen Bereich des Volumens 30 entweichen - an der Sprühdüse 37 wird reines Spülfluid 15 abgegeben.

Der Anschluß 38 für den Schlauch 34 liegt vorzugsweise an der mantelseitigen Oberfläche 42 des Verschlußteils 11; er könnte sich aber auch an dessen Oberseite 19 befinden. Vorzugsweise ist der Anschluß 38 als kurzer Rohrstutzen ausgebildet, dessen Außendurchmesser geringfügig größer ist als der Innendurchmesser des Schlauchs 34, so dass letzterer unter elastischer Aufdehnung auf den Anschluß 38 geschoben werden kann und sodann dort festgehalten wird, ggf. auch durch eine Oberflächenstruktur des Anschlusses 38 mit Ringwülsten von widerhakenförmigem Querschnitt.

Um den Schlauch 34 für den Transport leicht von dem Verschluss 3 lösen zu können, kann der Anschluss 38 aus zwei zusammen- und auseinanderschraubbaren Elementen bestehen, zwischen denen ein Dichtungsring einklemmbar ist.

Das Handstück 35 kann einen identischen Anschluß 43 für den Schlauch 34 aufweisen wie der Verschluß 3. Von einem rückwärtigen Griff 44 erstreckt sich ein Schaft 45 nach vorne und endet in der Düse 37. Der Betätigungsknopf 36 ist mit einem integrierten Ventil gekoppelt. Dieses ist vorzugsweise durch eine integrierte Feder in Schließstellung vorgespannt. Sodann ist das Volumen 30 hermetisch abgeschlossen, das Spülfluid kann nicht entweichen. Durch einen Druck auf den Betätigungsknopf 36 wird die Strömungsverbindung zwischen Volumen 30 und Düse 37 geöffnet - das Spülfluid wird unter hohem Druck versprüht. Je nach Bedarf kann die Düse 37 austauschbar sein, bspw. um wahlweise eine Düse mit einem engen oder einem weiten Strahl verwenden zu können.

## Patentansprüche

1. Munddusche, umfassend
a) einen stabilen Behälter für das Spülfluid aus einem steifen Werkstoff, mit einem Boden, worauf der Behälter in der normalen Gebrauchslage aufrecht steht, und mit einem Mantel,
b) einen lösbaren Behälterverschluß,
c) eine manuell betätigbare Luftpumpe, deren Druckleitung mit dem Behälterinneren gekoppelt ist,
d) und einen Auslaß für das Reinigungsfluid,
e) wobei der mit dem Behälterinneren gekoppelte Auslaß wie auch die manuell betätigbare Luftpumpe an dem Behälterverschluß angeordnet ist,
**dadurch gekennzeichnet, dass**
f) die Luftpumpe außerhalb des Behälters für das Spülfluid angeordnet ist, nämlich
g) seitlich neben dem Behälter
h) an einem seitlich etwa radial auskragenden Fortsatz des Behälterverschlusses, der an seiner Peripherie in einen zur Längsachse des Behälters parallelen Gehäuseabschnitt übergeht, welcher die eigentliche Luftpumpe beherbergt.

2. Munddusche nach Anspruch 1, **dadurch gekennzeichnet, dass** der stabile Behälter für das Spülfluid etwa die Gestalt einer Flasche aufweist, vorzugsweise einer bis zu einem mehrfachen des atmosphärischen Drucks druckfesten Flasche.

3. Munddusche nach Anspruch 1 oder 2, **dadurch gekennzeichnet, dass** sich der Mantel des Behälters für das Spülfluid im Bereich seiner Oberseite nach Art eines Flaschenhalses verjüngt, in oder an dem ein Schraubgewinde vorgesehen ist, wobei an dem Behälterverschluß ein zu dem Gewinde des Flaschenhalses komplementäres Gewinde vorgesehen ist.

4. Munddusche nach einem der vorhergehenden Ansprüche, **dadurch gekennzeichnet, dass** die Luftpumpe nach Art einer Kolbenpumpe ausgebildet ist.

5. Munddusche nach einem der vorhergehenden Ansprüche, **dadurch gekennzeichnet, dass** der Kolben mittels eines über die auslaßseitige und/oder obere Pumpenstimfläche hinaus ragenden Betätigungselements In vertikaler Richtung innerhalb des Pumpenzylinders verschiebbar ist.

6. Munddusche nach einem der vorhergehenden Ansprüche, **dadurch gekennzeichnet, dass** der Kolben einen teller-, schüssel- oder schalenförmig umgebogenen Rand aufweist.

7. Munddusche nach einem der vorhergehenden Ansprüche, **dadurch gekennzeichnet, dass** zwischen der Luftaustrittsöffnung der Luftpumpe und dem Innenraum des Behälters für das Spülfluid ein Rückschlagventil angeordnet ist, das so ausgebildet und eingebaut ist, dass es Luft in den Behälter hinein, aber nicht aus diesem heraus läßt.

8. Munddusche nach einem der vorhergehenden Ansprüche, **dadurch gekennzeichnet, dass** an dem Behälterverschluß ein mit dem Behälterinnenraum kommunizierender Auslaß zum Anschluß der eigentlichen Sprühvorrichtung vorgesehen ist, wobei an der in den Behälterinnenraum mündenden Öffnung der Strömungsverbindung des Behälterverschlusses zu einer eigentlichen Sprühvorrichtung ein rohr- oder schlauchftirmiger Fortsatz angeformt oder angeschlossen ist, dessen Öffnung sich etwa im Bereich des Behälterbodens befindet.

9. Munddusche nach einem der vorhergehenden Ansprüche, **dadurch gekennzeichnet, dass** die Sprühvorrichtung über einen Schlauch angeschlossen ist.

10. Munddusche nach einem der vorhergehenden Ansprüche, **dadurch gekennzeichnet, dass** zwischen einer Sprühdüse und dem Behälterinneren, insbesondere im Bereich eines Handgriffs der Sprühvorrichtung, ein manuell betätigbares Ventil vorgesehen ist.

## Claims

1. Water pick comprised of
a) a sturdy container for the rinsing fluid which container is made of a stiff material with a bottom, where on the container stands upright in the normal position of use, and with a jacket,
b) a detachable container closure,
c) a manually activatable air pump whose pressure line is coupled with the inside of the container,
d) and an outlet for the cleaning liquid,
e) wherein the outlet coupled with the inside of the container as well as also the manually activatable air pump is located on the container closure,
**characterized in that**
f) the air pump is located outside the container for the rinsing fluid, namely
g) on the side next to the container
h)on a sideways approximately radially protruding extension of the container closure which on its periphery passes over into a housing section parallel to the longitudinal axis of the container which houses the actual air pump.

2. Water pick as defined in claim 1, **characterized in that** the sturdy container for the rinsing fluid has the approximate shape of a bottle, preferably a pressure-proof bottle which has up to a multiple of the atmospheric pressure.

3. Water pick as defined in claim 1 or 2, **characterized in that** the jacket of the container for the rinsing fluid tapers in the area of the upper side like a bottle neck in or on which a screw thread is provided, wherein a thread is provided on the container closure which thread is complementary to the thread of the bottle neck.

4. Water pick as defined in one of the preceding claims, **characterized in that** the air pump is designed in the manner of a plunger pump.

5. Water pick as defined in one of the preceding claims, **characterized in that** the plunger can be moved vertically within the pump cylinder via an actuating element protruding outside the outlet-side and/or upper front side of the pump.

6. Water pick as defined in one of the preceding claims, **characterized in that** the plunger has a plate-, bowl- or shell-shaped, bent-over edge.

7. Water pick as defined in one of the preceding claims, **characterized in that** a kickback valve is located between the air outlet opening of the air pump and the inside of the container for the rinsing fluid, which kickback valve is designed and installed in such a manner that air can enter the container but cannot exit the container.

8. Water pick as defined in one of the preceding claims, **characterized in that** an outlet located on the container closure which outlet communicates with the inside area of the container and which outlet is provided for the connection of the actual spraying device, wherein a tube or hose-shaped extension is molded or connected to the opening of the flow connection of the container closure to an actual spraying device which opening ends inside the container and which extension is located approximately in the area of the container bottom.

9. Water pick as defined in one of the preceding claims, **characterized in that** the spraying device is connected via a hose.

10. Water pick as defined in one of the preceding claims, **characterized in that** a manually activatable valve is provided between a spraying jet and the inside of the container in particular in the area of a handle of the spraying device.

## Revendications

1. Douche buccale comprenant
a) un réservoir stable réalisé en un matériau rigide pour le fluide de rinçage, avec un fond sur lequel le réservoir est en position verticale dans la position d'usage normale, et avec une enveloppe,
b) une fermeture de réservoir amovible,
c) une pompe à air à commande manuelle dont le conduit de refoulement est relié à l'intérieur du réservoir,
d) et une sortie pour le fluide de nettoyage,
e) où la sortie reliée à l'intérieur du réservoir ainsi que la pompe à air à commande manuelle sont disposées au niveau de la fermeture du réservoir,
**caractérisée en ce que**
f) la pompe à air est disposée à l'extérieur du réservoir pour le fluide de rinçage, à savoir
g) latéralement à côté du réservoir
h) sur un prolongement latéral approximativement radialement en saillie de la fermeture du réservoir, qui se transforme sur sa périphérie en une section de boîtier parallèle à l'axe longitudinal du réservoir qui abrite la pompe à air proprement dite.

2. Douche buccale selon la revendication 1, **caractérisée en ce que** le réservoir stable pour le fluide de rinçage présente approximativement la forme d'une bouteille, de préférence d'une bouteille résistante à la pression jusqu'à un multiple de la pression atmosphérique.

3. Douche buccale selon la revendication 1 ou 2, **caractérisée en ce que** l'enveloppe du réservoir pour le fluide de rinçage se rétrécit dans la zone de sa partie supérieure sous forme d'un col de bouteille, dans ou sur lequel est prévu un filetage, où un filetage complémentaire au filetage du col de bouteille est prévu sur la fermeture du réservoir.

4. Douche buccale selon l'une des revendications précédentes, **caractérisée en ce que** la pompe à air est réalisée sous forme d'une pompe à piston.

5. Douche buccale selon l'une des revendications précédentes, **caractérisée en ce que** le piston peut être déplacé en sens vertical à l'intérieur du cylindre de pompe au moyen d'un organe de commande dépassant de la face frontale de pompe côté sortie et/ou de la face frontale de pompe supérieure.

6. Douche buccale selon l'une des revendications précédentes, **caractérisée en ce que** le piston présente un bord recourbé en forme de plateau, de cuve ou de cuvette.

7. Douche buccale selon l'une des revendications précédentes, **caractérisée en ce qu'**un clapet anti-retour est disposé entre l'orifice de sortie d'air de la pompe à air et l'intérieur du réservoir pour le fluide de rinçage, qui est conçu et monté de telle façon qu'il laisse entrer de l'air dans le réservoir, mais n'en laisse pas sortir de ce dernier.

8. Douche buccale selon l'une des revendications précédentes, **caractérisée en ce que** sur la fermeture du réservoir est prévue une sortie communicant avec l'intérieur du réservoir pour le raccordement du dispositif de pulvérisation proprement dit, où sur l'ouverture débouchant dans l'intérieur du réservoir du raccordement de flux de la fermeture du réservoir est moulé ou raccordé un prolongement en forme de tube ou de tuyau flexible en un dispositif de pulvérisation proprement dit dont l'ouverture se trouve approximativement dans la zone du fond du réservoir.

9. Douche buccale selon l'une des revendications précédentes, **caractérisée en ce que** le dispositif de pulvérisation est relié par l'intermédiaire d'un tuyau flexible.

10. Douche buccale selon l'une des revendications précédentes, **caractérisée en ce qu'**une valve à commande manuelle est prévue entre une buse de pulvérisation et l'intérieur du réservoir, en particulier dans la zone d'une poignée du dispositif de pulvérisation.
